# EUROPEAN PATENT APPLICATION

(11) **EP 1 063 858 A1**
(43) Date of publication of application: **27.12.2000**
(21) Application number: 99202052.9
(22) Date of filing: 25.06.1999
(51) Int. Cl.: H04Q 7/22

(54) **Mobile telecommunications system for information retrieval**

(71) Applicant: Koninklijke KPN N.V., 9726 AE Groningen (NL)
(72) Inventor: Kerkdijk, Hendrikus, 9713 EX Groningen (NL); Doyle, Declan Joseph, 9725 LD Groningen (NL)
(74) Representative: Klein, Bart

(57) **Abstract**

Mobile telecommunications system like UMTS, comprising user terminals, a transmission network and network control means. Software agents residing within the user terminals, for instance within a SIM card inserted in the terminal, co-operating with software agents residing within the UMTS network or residing within internet servers, accessable via the UMTS network, enable users to select most apropriate (sub)networks and to make use of "compound services": services which integrate traditional telephony with all sorts of other services such as e-commerce, service reservation, internet, etc.

## Description

### SCOPE OF THE INVENTION

The invention refers to a SIM card for a user terminal, comprising control means for identifying a user of the terminal to a mobile telecommunications network. The invention may also refer to a mobile telecommunications system, comprising user terminals, a transmission network and network control means. Moreover, the invention refers to an information system for storage, retrieval and disimination of information, comprising information servers, a telecommunications system, and user terminals. Said telecommunications system may be the future mobile telecommunications system UMTS (Universal Mobile Telecommunications System). The UMTS is widely seen as the next generation mobile telecommunications system. The UMTS is defined such that various subnetworks are established, which together comprise the global UMTS network. Subnetworks may for instance be managed by private organisations like offices, hotels, companies etc., as well as public telecom operators. This implies that the number of network domains will be substantially larger than in the current mobile networks like GSM.

In addition to the above basic "network selection" aim, a second aim of UMTS is to enable the user to make use of "compound services": services which integrate traditional telephony with various sorts of other services such as e-commerce, service reservation, internet, etc. At present, however, it is not clear how these characteristics will be implemented at a technical level. Various problems have to be solved.

About the item "network selection", users, wanting to use UMTS services, have to register (and deregister) with the appropriate subnetworks (Network Selection). At present, no clear means of establishing this has been defined. However, this is a fundamental requirement for the user's basic connectivity needs.

About the item "compoun services", for users to avail of such compound services, a mechanism must exist that enables the service layer to interact with the network layer. At present the Wireless Access Protocol (WAP) has been defined, which functions at the network level but is necessary for the provisioning of internet services through the use of mobile terminals. However, the WAP describes the interaction between the two layers but, at present, no clear means of establishing this has been defined.

### SUMMARY OF THE INVENTION

For establishing the above mentioned items, the present invention proposes the use of a software agent within the UMTS user's SIM (Secure Identification Module) card, said agent being able to co-operate with one or more software agents within the UMTS network or internet.

Software agents are (see Guttman et al) programs to which one can delegate a task. They differ from traditional software in that they are personalized, continuously running and semi-autonomous. Moreover, software agents are independent, autonomous and pro-active, aware of their environment, preferably intelligent and able to learn and maintaining dynamic relationships.

Agent functionality within the SIM card and the UMTS network allows various new services to be implemented.

Furthermore, the presence of agents within the SIM card provides inherent security features, both for data transfer and speech communication.

Below an exemplary architecture is discussed, that enables agent technology to be integrated within UMTS services.

### EXEMPLARY EMBODIMENT

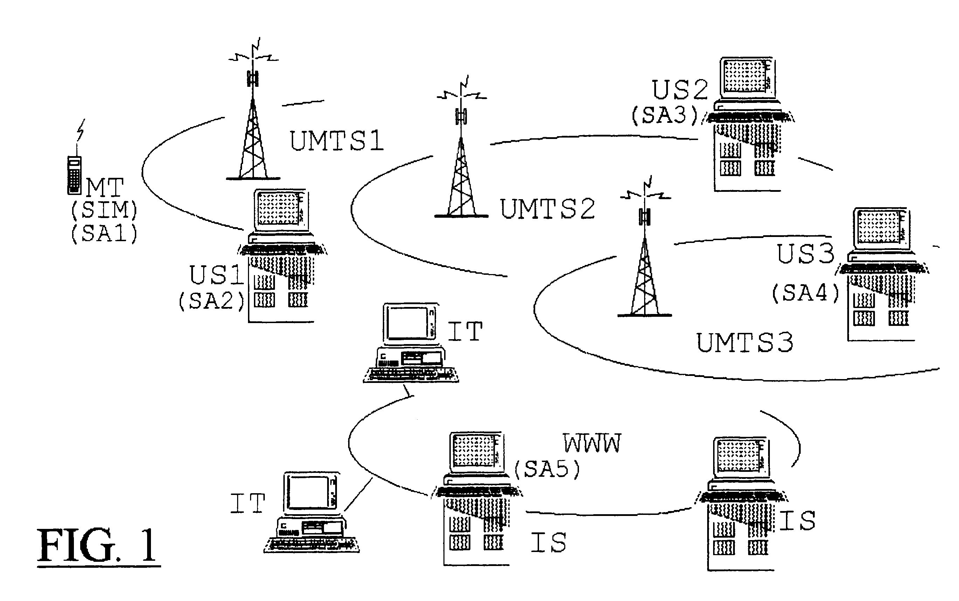

Figure 1 shows schematicly a UMTS architecture, which may resolve the issues described above.

Figure 1 shows a telecommunications system, comprising a user terminal MT, a transmission network, comprising a number of subnetworks UMTS1, UMTS2 and UMTS3. Network control means of those subnetworks are presented by UMTS network servers US1, US2 and US3. The terminal MT comprises a (not visible) SIM card, comprising a software agent SA1. The software agent SA1 may be issued by one network provider, for instance server US1. The software agent SA1 is able to be set by the user (not shown) of the terminal MT, and is able, after being set by the user, to exchange data with the servers US1, US2 US3 or with other software agents SA2, SA3, SA4 residing at servers US1, US2 US3, via said transmission network, and to process said data and to "negotiate" with said servers and outside agents autonomously.

Characteristic for agents is that each of them represents one party -a user of a server- and they mutually exchange and process data according to the parameters initially set by the respective party, as an autonomous process, without further interference by the representing party.

The software agent SA1 is also able to exchange data -via transmission network- with non-UMTS servers within other networks, like internet servers IS within the internet WWW, or with software agents SA5 residing within such servers and to negotiate autonomously with them. In that way the terminal and it's software agent SA1 may be part of not only a telecommunication system, but of an information system for storage, retrieval and disimination of information.

Two categories of services can distinguished: (mobile) telephony services, relating to the user's basic connectivity needs, i.e. network selection, and "compound services", which integrate commercial internet services with UMTS connectivity. Below two examples of the use of agents according to the invention:

### Network Selection

A user travelling through different UMTS domains UMTS1, UMTS2, UMTS3 may instruct the user's agent SA1 to automatically register with all necessary UMTS subnetworks UMTS1, UMTS2, UMTS3. Furthermore, according to a user-defined profile, the agent SA1 may, in a negotiating session, select appropriate networks, e.g. based on the costs and facilities. That is, the user may set criteria which the UMTS subnetworks need to match, such as an upper boundary for connectivity charges. In addition, providers of mobile telephony services, being the issuers of the SIM cards and the SIM card resident agents SA1, may have control over certain agent characteristics. This may enable them to influence the agent's choice of network and, moreover, may implement other features.

### Compound services

SIM card resident agents SA1 may serve as a link towards internet based services, represented by servers IS. This way, UMTS agents may perform various tasks, such as buying CD's or booking a trip, for the user while the user is in transit. Alternatively, a user may have various agents active on the internet to perform these tasks. The user may monitor and control the activity of the user's internet agents while in transit by means of communication between the UMTS agent and the internet agents.

It should be noted that a user's UMTS agent can negotiate on the user's behalf with agents SA2, SA3 SA4, SA5 or with non-agent based servers US1, US2. US3, IS, using appropriate protocols.

An additional benefit of using agents in a service-centred network is that suppliers of services, e.g. merchants, can actively send special offers to a user's agent for services that user might be interested in. The user's agent can autonomously deal with these offers and notify the user only if really appropriate offers come about. In this case, a Telco (US1, US2, US3) provides two services. Firstly, the Telco provides a user with a UMTS agent SA1 that can act on the user's behalf and entitles the user to discounts or special offers through the Telco's contracts or relationships. Secondly, the Telco is providing a service to other service providers by giving them access to its user base.

### REFERENCES

Guttman RH et al, Agent-mediated Electronic Commerce: A Survey, http://ecommerce.media.mit.edu/papers/ker98.pdf

## Claims

1. Identification card for a user terminal (MT), comprising control means (SIM) for identification a user of the user terminal to a transmission network (UMTS#), CHARACTERIZED BY a software agent (SA1), residing within said control means (SIM), said software agent being able to be set by the user via said terminal (MT), and being able, after being set by the user, to exchange data with servers (US#, IS#) or other software agents (SA#) outside the SIM card, via said transmission network, and to process said data according to the user's settings, said data exchange and processing being executed by said software agent (SA1) without any user interference.

2. Telecommunications system, comprising user terminals (MT), a transmission network (UMTS#) and network control means (US#), CHARACTERIZED BY software agents (SA1) residing within said user terminals, each of said software agents being able to be set by the user of the respective terminal, and being able, after being set by the user, to exchange data with servers (US#, IS#) or other software agents (SA#) outside that terminal, via said transmission network, and to process said data according to the user's settings, said data exchange and processing being executed by said software agent (SA1) without any user interference.

3. Information system for storage, retrieval and disimination of information, comprising information servers (IS#), a telecommunications system (UMTS#) and user terminals (MT), CHARACTERIZED BY software agents (SA1) residing within said user terminals, each of said software agents being able to be set by the user of the respective terminal, and being able, after being set by the user, to exchange data with servers (US#, IS#) or other software agents (SA#) outside that terminal, via said transmission network, and to process said data according to the user's settings, said data exchange and processing being executed by said software agent (SA1) without any user interference.
